# DEMANDE DE BREVET EUROPEEN

(11) **EP 1 876 036 A1**
(43) Date de publication de la demande: **09.01.2008**
(21) Numéro de dépôt: 06291101.1
(22) Date de dépôt: 04.07.2006
(51) Int. Cl.: B60B 21/12

(54) **Jante de roue, en particulier pour engin tout terrain ou roulant à basse pression**

(71) Demandeur: Huchinson, 75008 Paris (FR)
(72) Inventeur: Tavin, Gérard, 49100 Angers (FR); Zarife, Victor, 45120 Cepoy (FR)
(74) Mandataire: Bolinches, Michel Jean-Marie

(57) **Abrégé**

Jante de roue, en particulier pour un engin tout terrain ou destiné à rouler à basse pression, comprenant un revêtement anti-abrasion (10) dans au moins une zone sensible située entre la jante (1) et les talons (T) d'un pneumatique (P) destiné à être monté sur la jante (1), caractérisée en ce que le revêtement (10) présente au moins une lèvre d'étanchéité (12) apte à s'opposer à l'entrée de particules abrasives entre la jante (1) et les talons (T) du pneumatique (P).

## Description

L'invention concerne une jante de roue plus particulièrement conçue pour un engin destiné à rouler sur des terrains accidentés, des pistes ou analogues, ou à rouler à basse pression.

D'une manière générale, une jante de roue présente notamment deux rebords périphériques contre lesquels viennent en appui les deux talons du pneumatique, la force d'appui devant être suffisante pour obtenir un bon coefficient de frottement entre la jante et le pneumatique, et assurer ainsi un entraînement correct lorsque l'engin roule notamment à basse pression sur un terrain meuble par exemple.

Les contacts entre la jante et les talons du pneumatique sont des zones sensibles qui peuvent être endommagées par des particules solides de l'environnement extérieur qui viennent s'immiscer au niveau de ces contacts et créer une usure susceptible de nuire au coefficient de frottement entre la jante et le pneumatique, et entraîner un changement prématuré du pneumatique et/ou de la jante.

Pour pallier ces risques d'usure, il est connu de procéder à un durcissement superficiel de l'aluminium lorsque la jante est faite en ce matériau.

Un but de l'invention est de proposer une solution nouvelle au problème de l'abrasion possible des surfaces de contact entre la jante et les talons du pneumatique pour pallier les inconvénients de la solution antérieure évoquée précédemment.

A cet effet, l'invention propose une jante de roue, en particulier pour un engin tout terrain ou destiné à rouler à basse pression, qui comprend un revêtement anti-abrasion dans au moins une zone sensible située entre la jante et les talons d'un pneumatique destiné à être monté sur la jante, caractérisée en ce que ledit revêtement présente au moins une lèvre d'étanchéité apte à s'opposer à l'entrée de particules abrasives entre la jante et les talons du pneumatique.

Avantageusement, ledit revêtement est en un matériau élastomère, ce revêtement anti-abrasion pouvant être en polyuréthane par exemple avec une épaisseur de l'ordre du millimètre.

D'une manière générale, la jante peut être en aluminium, être monobloc ou au moins en deux parties.

L'invention concerne également une roue équipée d'une telle jante.

La jante selon l'invention avec son revêtement anti-abrasion présente un avantage important, à savoir une augmentation du coefficient de frottement entre la jante et les talons du pneumatique. Ainsi, cela permet soit de supprimer la cale annulaire, appelée "*beadlock*" prévue pour maintenir l'effort d'entraînement du pneu par la jante en roulage basse pression, soit d'en réduire le poids. De plus, dans le cas de la suppression de la cale, il est possible d'utiliser une jante en une seule partie au lieu de deux lorsque l'usage d'un "*beadlock*" est nécessaire.

Par ailleurs, l'absence d'usure tant au niveau des talons pneumatique qu'au niveau de la jante, permet d'éviter un changement prématuré de l'un et/ou de l'autre de ces éléments, ce qui prouve un résultat avantageux du point de vue financier pour le propriétaire de l'engin.

D'autres avantages, caractéristiques et détails de l'invention ressortiront du complément de description qui va suivre en référence à des dessins annexés, donnés uniquement à titre d'exemple et dans lesquels :
- la figure 1 est une demi-vue en coupe d'une jante de roue selon l'invention ;
- la figure 2 est une demi-vue en coupe de la jante de roue de la figure 1 avec les deux talons d'un pneumatique monté sur la jante ; et
- la figure 3 est un agrandissement du détail III de la figure 2.

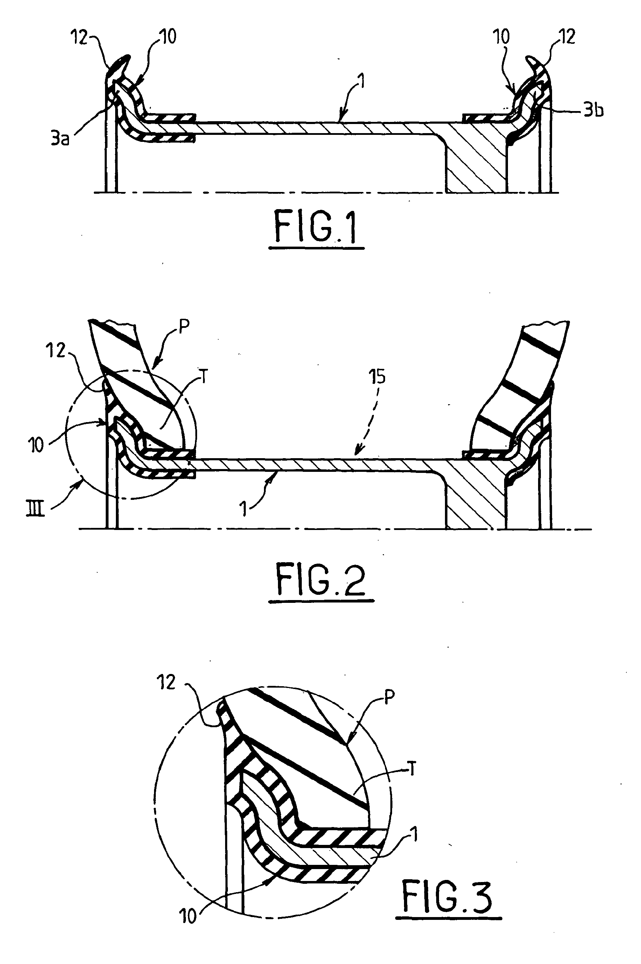

La jante de roue 1 est une jante monobloc par exemple qui, d'une façon connue en soi, présente deux rebords périphériques 3a et 3b (figure 1) sur les faces internes desquels viennent en appui les deux talons T d'un pneumatique P (figure 2).

Au moins, les deux rebords de jante 3a et 3b sont recouverts d'un revêtement anti-abrasion 10 en un matériau élastomère, tel du polyuréthane par exemple, et avec une épaisseur de l'ordre du millimètre. On peut également prévoir la présence d'au moins une lèvre d'étanchéité 12 s'étendant globalement à partir du sommet de chaque rebord 3a et 3b (figure 1), et qui est destinée à venir, après déformation, en contact serré avec un talon T du pneumatique P (figures 2 et 3).

D'une manière générale, lorsque la jante 1 est en aluminium et obtenue par un procédé de moulage, l'expérience montre qu'elle peut présenter des défauts de porosité. Dans ce cas, le revêtement anti-abrasion 10 peut être déposé sur toute la surface de la jante 1 et pallier ainsi ces défauts de porosité.

Par ailleurs, il est connu pour des jantes en deux parties, de monter autour de la jante une cale annulaire 15 ("*beadlock*" en langue anglaise), telle qu'illustrée en traits mixtes sur la figure 2, et qui est destinée à presser les talons du pneumatique P contre les deux rebords 3a et 3b de jante pour procurer un meilleur entraînement du pneumatique P par la jante 1. D'une manière générale, cette cale 15 est une pièce faite en métal et/ou en caoutchouc, qui augmente notablement le poids de la jante qui se trouve être obligatoirement en deux parties. Or, l'expérience montre que le revêtement anti-abrasion 10 augmente le coefficient de frottement entre la jante et les talons du pneumatique, ce qui permet soit de supprimer la cale 15 soit de pouvoir en alléger le poids. Cette notion de poids est importante, notamment pour des engins militaires qui sont transportés par voie aérienne.

Le revêtement anti-abrasion 10 peut être déposé par projection ou par moulage, et sa fixation est obtenue par des agents d'adhérisation connus en soi. Le revêtement anti-corrosion et sa lèvre d'étanchéité 12 ne forment qu'une seule pièce, sachant qu'elle pourrait éventuellement être fabriquée par extrusion avec au moins deux matériaux différents.

Le pneumatique P monté sur la jante 1 est avantageusement sans chambre à air, et peut être également équipé d'un système de roulage à plat.

## Revendications

1. Jante de roue, en particulier pour un engin tout terrain ou destiné à rouler à basse pression, comprenant un revêtement anti-abrasion (10) dans au moins une zone sensible située entre la jante (1) et les talons (T) d'un pneumatique (P) destiné à être monté sur la jante (1), **caractérisée en ce que** le revêtement (10) présente au moins une lèvre d'étanchéité (12) apte à s'opposer à l'entrée de particules abrasives entre la jante (1) et les talons (T) du pneumatique (P).

2. Jante de roue selon la revendication 1, dans laquelle le revêtement (10) est en un matériau élastomère.

3. Jante de roue selon la revendication 2, dans laquelle le revêtement (10) est en polyuréthane.

4. Jante de roue selon l'une des revendications précédentes, dans laquelle le revêtement (10) à une épaisseur de l'ordre du millimètre.

5. Jante de roue selon l'une des revendications précédentes, dans laquelle le revêtement (10) est projeté ou moulé sur la jante (1).

6. Jante de roue selon l'une des revendications précédentes, dans laquelle la jante (1) est en aluminium.

7. Jante de roue selon l'une des revendications précédentes, dans laquelle la jante (1) est monobloc.

8. Jante de roue selon l'une des revendications 1 à 6, dans laquelle la jante (1) est au moins en deux parties.

9. Jante de roue selon la revendication 8, dans laquelle une cale annulaire (15) est rapportée autour de la jante (1) en prenant appui sur les deux talons (T) du pneumatique (P), ladite cale (15) étant allégée.

10. Roue pour engin tout terrain ou destinée à rouler en basse pression, cette roue comprenant un pneumatique (P) monté sur une jante (1), **caractérisée en ce que** la jante (1) est une jante selon l'une quelconque des revendications précédentes.
